(19) Europäisches Patentamt
European Patent Office
Office européen des brevets

(11) **EP 0 674 560 B1**

(12) **EUROPÄISCHE PATENTSCHRIFT**

(45) Veröffentlichungstag und Bekanntmachung des Hinweises auf die Patenterteilung:
**04.06.1997 Patentblatt 1997/23**

(21) Anmeldenummer: 93924601.3

(22) Anmeldetag: **08.11.1993**

(51) Int. Cl.$^6$: **B23B 51/00**

(86) Internationale Anmeldenummer:
**PCT/EP93/03118**

(87) Internationale Veröffentlichungsnummer:
**WO 94/12305 (09.06.1994 Gazette 1994/13)**

(54) **BOHRER MIT AUSTAUSCHBAREM SCHNEIDEINSATZ**

DRILL WITH INTERCHANGEABLE CUTTING INSERT

OUTIL DE FORAGE A PIECE DE COUPE RAPPORTEE INTERCHANGEABLE

(84) Benannte Vertragsstaaten:
**AT CH DE ES FR GB IT LI SE**

(30) Priorität: **23.11.1992 DE 4239311**

(43) Veröffentlichungstag der Anmeldung:
**04.10.1995 Patentblatt 1995/40**

(73) Patentinhaber: GÜHRING, Jörg
**D-72458 Albstadt (DE)**

(72) Erfinder:
• **REINAUER, Josef**
**D-72488 Sigmaringen (DE)**

• KUHL, Hans, G.
**D-78048 Villingen (DE)**

(74) Vertreter: **Röss, Walter Josef**
**KUHNEN, WACKER & PARTNER,**
**Alois-Steinecker-Strasse 22**
**85354 Freising (DE)**

(56) Entgegenhaltungen:
**EP-A- 0 441 302    FR-A- 2 074 491**
**FR-A- 2 126 620    FR-A- 2 317 989**
**US-A- 4 475 853**

## Beschreibung

Die Erfindung betrifft einen Bohrer, bestehend aus einem im wesentlichen zylindrischen Halter mit einer Längsachse und einer rechtwinklig dazu verlaufenden Querachse, mit einer Bohrspitze, in der eine längs der Querachse verlaufende Nut mit einem Nutgrund und mit Nutseitenwänden angeordnet ist, und mit einem in der Nut angeordneten Schneideinsatz, insbesondere aus Hartmetall, der zwei vorzugsweise punktsymmetrisch zur Längsachse, im wesentlichen parallel zur Querachse angeordnete Hauptschneiden, zwei sich nach vorne anschließende Spanflächen und zwei je einer Spanfläche auf der anderen Seite der Querachse gegenüberliegende Rückseitenflächen aufweist.

Ein solcher Bohrer ist bekannt aus dem gattungsbildenden Stand der Technik in Form der DE-PS 32 04 210. Bei dem dort beschriebenen Bohrer sind Befestigungselemente in Form von Schrauben vorgesehen, mit denen der Schneideinsatz in der Nut des Schafts gehalten wird, indem er mit den Nutseitenflächen verschraubt wird. Hierzu weist der Schneideinsatz mindestens eine rechtwinklig zur Querachse und rechtwinklig zur Längsachse des Bohrers angeordnete Bohrung auf, durch die eine Schraube hindurchgreift. Der Schraubenkopf ist dabei vorzugsweise als Senkkopf ausgebildet und liegt so in einer entsprechend angesenkten Bohrung des Schneideinsatzes, daß der Schraubenkopf mit der Oberfläche des Schneideinsatzes bündig abschließt oder gegenüber der Oberfläche versenkt angeordnet ist. Die Schraube ist aber insbesondere bei einer bevorzugten Ausführungsform mit zwei Bohrungen so angeordnet, daß der Schraubenkopf in einer Spanfläche liegt und ein mit einem Gewinde versehener Schraubenschaft auf der der Spanfläche gegenüberliegenden Rückseitenfläche des Schneideinsatzes austritt und in eine in der entsprechenden Nutseitenwand angebrachte Gewindebohrung eingreift. Die Mittelachsen der in dem Schneideinsatz zur Aufnahme der Befestigungsschrauben vorgesehenen Bohrungen und die Mittelachsen der in den Nutseitenflächen zur Aufnahme des Gewindeteils der Befestigungsschrauben vorgesehenen Gewindebohrungen sind dabei etwas versetzt zueinander angeordnet, so daß beim Einschrauben einer mit einem Senkkopf ausgestatteten Schraube eine Kraft ausgeübt wird, die den Schneideinsatz in Richtung auf den Nutgrund bewegt und dort zur Anlage bringt.

Dem beschriebenen Stand der Technik haftet der Nachteil an, daß die in den Spanflächen des Schneideinsatzes liegenden Schraubenköpfe eine saubere Spanabfuhr behindern. Darüberhinaus schwächen die zur Aufnahme der Befestigungsschrauben im Schneideinsatz vorgesehenen Bohrungen den Schneideinsatz, so daß als Ausgleich eine relativ große Erstreckung des Schneideinsatzes in Längsrichtug des Bohrers vorgesehen werden muß. Das verhältnis von Durchmesser dieses Bohrers, d. h. der Abstand der Nebenschneiden voneinander, zu der Höhe des Schneideinsatzes ist daher bei dem gattungsgemäßen Stand der Technik relativ klein, was bei gegebenem Durchmesser zu einer relativ großen Erstreckung des Schneideinsatzes in Längsrichtung des Bohrers und damit zu einer Schwächung der Bohrspitze des Bohrers führt.

Aus der DE-PS 36 11 999 ist weiterhin ein zwei- oder mehrschneidiges Bohrwerkzeug bekannt, bei dem austauschbare Schneidelemente mittels Schrauben in in der Bohrspitze entsprechend ausgebildeten Ausnehmungen befestigt sind, wobei die austauschbaren Schneidelemente in Schneidrichtung hinter der Hauptschneide mit Befestigungsabschnitten versehen sind, die jeweils eine Bohrung aufweisen, durch die Schrauben mit in der Stirnseite der Bohrerspitze ausgebildeten, zur Bohrerachse parallelen Gewindebohrung eingreifen. Die Befestigungsschrauben gemäß diesem Stand der Technik sind also parallel zur Bohrerachse angeordnet, und es ist für jede Hauptschneide jeweils ein eigenes Schneidelement bzw. ein eigener Schneideinsatz vorgesehen. Auch bei diesem Stand der Technik stellt sich das Problem, daß die Befestigungsschrauben durch Bohrungen in den Schneideinsätzen verlaufen, so daß Bohrungen in den Schneidelementen vorgesehen werden müssen, die die geometrischen Gestaltungsmöglichkeiten einschränken und zu einer entsprechenden Vergrößerung der Schneideinsätze führen.

Ausgehend von dem gattungsgemäßen Stand der Technik liegt der Erfindung daher die Aufgabe zugrunde, einen Bohrer mit einem auswechselbaren Schneideinsatz zu schaffen, bei dem der Einsatz in einer in der Bohrspitze quer verlaufenden Nut gehalten wird, ohne daß hierzu Bohrungen im Schneideinsatz selbst erforderlich sind und der hinsichtlich seiner Abmessungen so gestaltet werden kann, daß die Bohrspitze des Halters möglichst wenig geschwächt wird. Dabei soll die Erfindung ein möglichst großes Anwendungsgebiet haben und insbesondere für alle gängigen Bohrergeometrien zur Zerspanung unterschiedlichster Werkstoffe anwendbar sein.

Die Lösung der Aufgabe ist bei einem Bohrer gemäß dem gattungsgemäßen Stand der Technik dadurch gekennzeichnet, daß der Halter des Bohrers zwei vorzugsweise in einer Radialebene des Bohrers liegende, jeweils im Bereich einer Rückseitenfläche des Schneideinsatzes angeordnete Bohrungen aufweist, die jeweils in eine Nutseitenwand münden, wobei die Längsachsen der Bohrung unter jeweils einem spitzen Winkel zu der jeweiligen Nutseitenwand und der anliegenden Rückseitenfläche des Einsatzes verlaufen, daß in den Bohrungen aus jeweils einer Nutseitenfläche austretende Anschlagelemente angeordnet sind, daß mindestens eines der beiden Anschlagelemente in Richtung der Längsachse der Bohrung beweglich ist und daß in den Rückseitenflächen des Einsatzes mit den Anschlagelementen korrespondierende Stützflächen bildende Vertiefungen vorgesehen bzw. ausgeformt sind.

Um punktsymmetrische Verhältnisse zu schaffen, ist bevorzugt vorgesehen, daß die Längsachsen der zur Aufnahme der Anschlagelemente im Schaft des Bohrers vorgesehenen Bohrungen unter demselben spitzen Winkel zu der jeweiligen Nutseitenwand und der jeweils anliegenden Rückseitenfläche des Schneideinsatzes angeordnet sind, und daß die Längsachsen der Bohrungen denselben Abstand von der Längsachse des Bohrers bzw. des Halters aufweisen. Weiterhin ist das mindestens eine bewegliche Anschlagelement bevorzugt in Form einer Schraube, insbesondere in Form einer Madenschraube, mit einem Innensechskant ausgeführt.

Durch die erfindungsgemäße Ausgestaltung kommt das Schneidelement ohne durchgehende Bohrung aus. Die Form des Schneidelements wird extrem einfach, d.h. das bearbeitete Volumen des Schneidelements wird minimiert. Anstelle der im Stand der Technik vorgesehenen Bohrungen, die rechtwinklig zu der im Gattungsbegriff definierten Querachse verlaufen, sind erfindungsgemäß lediglich Stützflächen bildende Vertiefungen vorgesehen, deren Flächennormalen im Gegensatz zum Stand der Technik nicht rechtwinklig zur Querachse, sondern diese unter einem spitzen Winkel schneidend verlaufen. Im Zusammenspiel mit den erfindungsgemäß vorgesehenen Anschlagelementen, die in Bohrungen im Halter des Bohrers angeordnet sind, ergibt sich damit eine Befestigungsmöglichkeit, bei der der Schneideinsatz nicht geschwächt wird und daher entsprechend flach, d. h. in Längsrichtung des Bohrers kleine Abmessungen aufweisend, ausgeführt werden kann. Damit eignet sich die erfindungsgemäße Befestigung für alle möglichen Schneidengeometrien, auch für solche, bei denen der Schneidenverlauf eine bereichsweise Verringerung der Schneidenelementdicke erfordert.

Zur Befestigung wird der Schneideinsatz in die Nut eingelegt und in einem zweiten Schritt das zumindest eine bewegliche Anschlagelement von der Außenseite des Bohrerschaftes her nach innen verschoben, vorzugsweise wird ein Anschlagelement in Form einer Madenschraube eingedreht. Da die Bohrungen jeweils im Bereich einer Rückseitenfläche des Einsatzes in einer Nutseitenwand münden und mit der Nutseitenwand einen spitzen Winkel einschließen, liegt der Schnittpunkt jeweils einer Längsachse einer Bohrung mit der Querachse auf der jeweils anderen Seite in bezug auf die Längsachse des Bohrers. Beim Anziehen der Anschlagelemente oder im Falle nur eines beweglichen Anschlagelements beim Anziehen des einen Anschlagelements wird daher ein Moment auf den Schneideinsatz ausgeübt, dessen Drehrichtung gleich dem Moment ist, das durch die Reaktionskräfte an den Schneiden des Bohrers beim Bohren erzeugt wird. Als Folge des erzeugten Moments werden die beiden Rückseitenflächen des Schneideinsatzes in ihren äußeren Randbereichen gegen die entsprechenden Nutseitenwände gedrückt und kommen dort zur Anlage. Die auf die Schneidkanten ausgeübten Kräfte werden dort abgestützt.

Da die Anschlagelemente unter einem Winkel angestellt sind, führt ein Verschieben eines Anschlagelements in Richtung der Längsachse der das Anschlagelement aufnehmenden Bohrung dazu, daß über den Kontakt zwischen einer Stirnfläche des Anschlagelements und der jeweiligen korrespondierenden Stützfläche in der entsprechenden Rückseitenfläche des Einsatzes, der Schneideinsatz in Richtung der Querachse um einen entsprechenden vektoriellen Anteil verschoben wird, bis diese Bewegung durch eine entsprechende Gegenbewegung des anderen Anschlagelements kompensiert wird. Auf diese Weise läßt sich die Zentrierung des Schneideinsatzes relativ zur Längsachse des Bohrers einfach bewerkstelligen. Die Einstellung wird bei punktsymmetrischer Anordnung der Anschlagelemente, die dann bevorzugterweise in einer gemeinsamen Radialebene liegen besonders einfach und zuverlässig.

Vorzugsweise ist weiter vorgesehen, daß die Stützflächen eben ausgebildet sind und von einem kreissektorförmigen Rand begrenzt sind. Auf diese Weise lassen sich die Stützflächen bzw. die sie bildenden Vertiefungen mittels eines Fräsers fertigungstechnisch einfach herstellen. Weiterhin kann vorteilhafterweise vorgesehen sein, daß zumindest eine eine Stützfäche bildende Vertiefung sich bis zum Schneideinsatzrücken, d. h. bis zu der dem Nutgrund zugewandten Kante erstreckt. Auf diese Weise kann der Schneideinsatz aus der Nut des ihn aufnehmenden Halters herausgezogen werden, ohne daß das korrespondierende Anschlagelement vollständig aus dem Nutbereich herausgedreht bzw. gezogen werde muß. Dies ist insbesondere vorteilhaft, wenn ein Anschlagelement als nicht verstellbares bzw. längs der Achse bewegliches Anschlagelement ausgeführt ist.

Insbesondere im letzten Fall kann ein Anschlagelement vorgesehen sein, das aus einer Madenschraube besteht, deren Länge kleiner ist als die Länge der sie aufnehmenden im Halter angeordneten Bohrung, so daß in dem verbleibenden, der Bohreraußenseite zugewandten Raum eine Konterschraube in Form einer kurzen Madenschraube mit Innensechskantkopf angeordnet sein kann. Auf diese Weise wird ein einmalig einstellbares Anschlagelement geschaffen, dessen Lage nach einmal erfolgter Zentrierung des Schneideinsatzes nicht mehr verändert werden muß. In der diesem Anschlagelement zugewandten Rückseitenwand des Schneideinsatzes kann eine Vertiefung der beschriebenen Art ausgebildet sein, nämlich eine Vertiefung, die bis zur der der Nut zugewandten Kante des Schneideinsatzes reicht.

Entsprechend kann auf der gegenüberliegenden Seite des Schneideinsatzes, d. h. auf der anderen Rückseitenfläche, eine Vertiefung vorgesehen sein, die nicht bis zum Nutgrund reicht, so daß bei eingeschraubtem Anschlagelement, d. h. eingeschraubter Madenschraube ein Heraus fallen des Schneideinsatzes verhindert wird. Mit einer solchen asymmetrischen Gestaltung der Vertiefungen wird der zusätzliche Vorteil erzielt, daß ein falsches Einsetzen des Schneidelements nicht möglich ist, solange der feste, einmal eingestellte Anschlag nicht verändert wird.

Weiterhin kann bevorzugt vorgesehen sein, daß die Längsachsen der die Anschlagelemente, beispielsweise die Madenschrauben, aufnehmenden Bohrungen gegenüber den in den Rückseitenflächen des Schneideinsatzes ausgebildeten Stützflächen etwas versetzt angeordnet sind, so daß die Stirnflächen der Anschlagelemente, beispielsweise die Stirnflächen der Madenschrauben die in den Rückseitenflächen ausgebildeten Stützflächen nur teilweise überdecken. Auf diese Weise wird erreicht, daß die Madenschrauben, bzw. vergleichbare Anschlagelemente, die Stützflächen nur mit einem Teil der Stirnfläche berühren, dessen Relativbewegung beim Einschrauben auf den Nutgrund gerichtet ist. Auf diese Weise wird auf den Schneideinsatz eine Kraft ausgeübt, die ihn auf den Nutgrund zu zieht, wodurch während der Montage ein definierter Sitz des Schneideinsatzes in der Nut erzielt wird.

Der erfindungsgemäße Aufbau der Bohrspitzenhalterung eignet sich für alle gängigen Schneidenverläufe, Bohrerquerschnitte und Bohrspitzengeometrien. Dies ist in erster Linie darauf zurückzuführen, daß die zur Befestigung des Einsatzes erforderlichen Funktionsflächen am Einsatz selbst sowie am Kalter möglichst einfach gehalten sind und daß auf diese Weise zum einen das Volumen des Schneideinsatzes und zum anderen das Zerspanungsvolumen am Halter minimiert werden können.

Gute Ergebnisse bei der Zerspanung von hochfesten Materialien können zum Beispiel dann erzielt werden, wenn der Schaft des Bohrers Spannuten aufweist, die im Bereich der Spanflächen des Schneideinsatzes auslaufen und bündig in diese übergehen.

Für die Zerspanung von zähen und festen Werkstoffen ist es von Vorteil, wenn die Spanfläche konkav gekrümmt ist. Ebenso können die Hauptschneiden konkav gekrümmt sein. Die Befestigungsgeometrie kann in diesem Fall durch die erfindungsgemäße Gestaltung der Schneideneinsatzhalterung unverändert beibehalten werden. Bedingt durch die schräge Anordnung der Bohrungen für die Aufnahme der Spann- und Anschlagelemente wird das Schneidelement im Bereich der konkaven Oberfläche nicht zusätzlich geschwächt. Gleichwohl kann durch geeignete Wahl des Anstellungswinkels zwischen Bohrungsachse für die Spann- und Anschlagelemente und Nut-Stützfläche beim Spannen und Justieren des Schneidelements ein Moment aufgebracht werden, das der Schnittrichtung des Bohrers entgegengerichtet ist und damit bereits von der Ersteinstellung an einen satten Sitz des Schneidelements im Schlitz garantiert.

Mit der erfindungsgemäßen Gestaltung der Befestigung kann das Verhältnis zwischen dem Durchmesser des Bohrers, d. h. der Abstand der beiden Nebenschneiden voneinander, zu der Abmessung des Schneideinsatzes in Längsrichtung des Bohrers erheblich angehoben werden, vorzugsweise in einen Bereich von etwa 2. Es hat sich gezeigt, daß die Bohrspitzenhalterung ohne weiteres für Bohrwerkzeuge einsetzbar ist, die Bohrungstiefen von bis zu 7xd erlauben.

Der erfindungsgemäße Bohrer hat aufgrund seiner Schneideneinsatzbefestigung erhebliche Festigkeitsreserven. Er kann deshalb ohne weiteres zum Zerspanen von sehr zähen Werkstoffen eingesetzt werden. In diesem Fall kann vorgesehen sein, daß der Spitzenwinkel größer als 140° ist, zumindest aber größer als 130°.

Bevorzugt weist der erfindungsgemäße Bohrer einen Kühlmittelkanal auf, durch den eine Kühlflüssigkeit, wie beispielsweise eine Schneidemulsion vom Schaftende des Bohrers zur Bohrspitze gefördert werden kann. Der Kühlmittelkanal ist vorzugsweise in der Längsachse des Bohrers angeordnet, wobei er sich im Bereich der Bohrspitze teilen kann und zwei abzweigende Teilkanäle vorzugsweise im Bereich der zum Schaft gehörenden Hauptfreiflächen austreten.

Die Erfindung wird im folgenden unter Bezugnahme auf die Zeichnung näher erläutert. In der Zeichnung zeigen:

Fig. 1    eine Seitenansicht eines Halters eines erfindungsgemäßen Bohrers,

Fig. 2    eine Draufsicht auf die Bohrerspitze des in Fig. 1 dargestellten Halters,

Fig. 3    einen Schnitt durch die Bohrerspitze des Halters längs der Linie III-III in Fig. 2,

Fig. 4    eine Seitenansicht eines erfindungsgemäßen Schneideinsatzes,

Fig. 5    eine Draufsicht auf den Schneideinsatz gemäß Fig. 4,

Fig. 6    einen Schnitt längs der Linie VI-VI in Fig. 4,

Fig. 7    eine Seitenansicht des erfindungsgemäßen Schneideinsatzes in Richtung der Querachse,

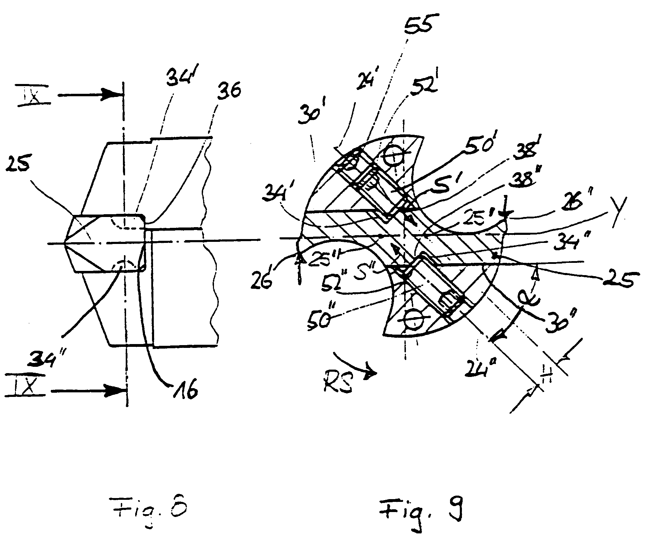

Fig. 8    eine schematische Darstellung des in die Nut des Halters eingesetzten Schneideinsatzes gemäß den Figuren 2 und 7, und

Fig. 9    einen Schnitt längs der Linie IX-IX in Fig. 8.

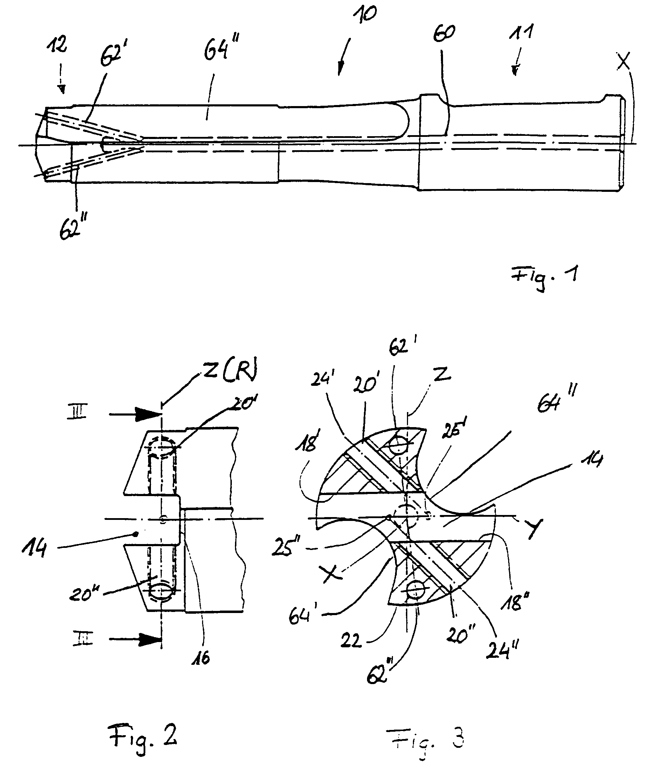

Fig. 1 zeigt einen Halter 10 eines erfindungsgemäßen Bohrers, der im wesentlichen zylindrisch ausgebildet ist und eine Längsachse X und eine in Fig. 3 gezeigte, rechtwinklig dazu verlaufende Querachse Y aufweist. Der Halter 10 weist einen Schaft 11 und eine Bohrerspitze 12 auf.

Wie die Figuren 2 und 3 zeigen, ist in der Bohrerspitze eine längs der Querachse Y verlaufende Nut 14 mit einem Nutgrund 16 und mit Nutseitenwänden 18', 18'' angeordnet.

Die Querachse Y und die senkrecht dazu stehende Koordinatenachse Z spannen eine Radialebene auf, die in Fig. 2 angedeutet ist. In dieser Radialebene sind zwei Gewindebohrungen 20' und 20" angeordnet, die von der Außenseite 22 des Bohrerschafts ausgehen und in den Mutseitenflächen 18' bzw. 18" münden. Die Längsachsen 24' und 24" der Bohrungen 18' und 18" sind jeweils unter einem spitzen Winkel zur Querachse Y bzw. zu den Nutseitenflächen 18' und 18" angeordnet. Die Schnittpunkte 25', 25" der Längsachsen 24' bzw. 24" mit der Querachse Y liegen jeweils auf der anderen Seite der Längsachse X des Halters 10 als die jeweiligen Bohrungen selbst.

Mit S' und S" sind die Spannkräfte bezeichnet, die über die Spann- und Anschlagelemente 50' und 50" auf einen Schneideinsatz 25 aufgebracht werden, der formschlüssig in der Nut 14 aufgenommen ist. Beim gezeigten Ausführungsbeispiel liegen die Achsen 24' und 24" in einer gemeinsamen Radialebene. Es soll jedoch an dieser Stelle bereits hervorgehoben werden, daß diese Ausrichtung für die erfindungsgemäße Funktion der Schneideinsatzhalterung keine unabdingbare Voraussetzung ist. Die in der Zeichnung dargestellte punktsymmetrische Anordnung der Spann- und Anschlagelemente ist ebenfalls nicht unbedingt erforderlich, wenngleich sie Vorteile hinsichtlich Fertigung, Montage und Handhabung mit sich bringt. Fig. 9 läßt erkennen, daß der spitze Winkel _ zwischen der Achse 24 und einer Nutseitenwand 18' bzw. 18" so gewählt ist, daß die Spannkräfte S" und S' ein Moment M = S" x H auf den Schneideinsatz 25 übertragen, das der Schnittrichtung RS des Bohrers entgegengerichtet ist. Mit anderen Worten, die Spannkräfte bewirken, daß der Schneideinsatz beim Justieren und beim Befestigen mit seinen Rückseitenflächen 30' bzw. 30" satt gegen die zugeordneten Nutseitenwände 18' bzw. 18" gepreßt werden.

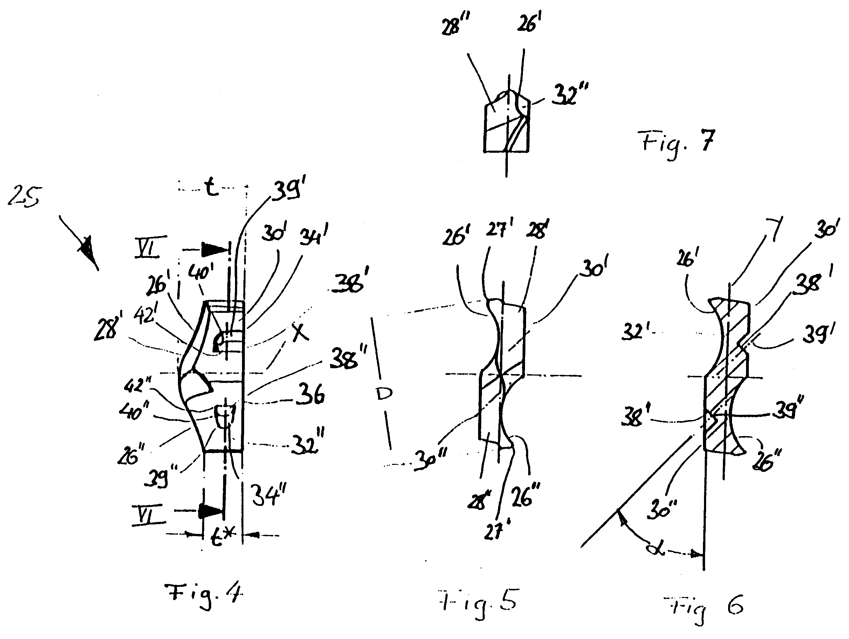

Die Figuren 4, 5 und 7 zeigen drei Ansichten des in die Nut 14 einzusetzenden Schneideinsatzes 25. Fig. 5 zeigt eine Draufsicht des Schneideinsatzes mit zwei konkav gekrümmten Hauptschneiden 26', 26"; zwei daran anschließenden Hauptfreiflächen 28' und 28" sowie zwei in Fig. 5 senkrecht zur Zeichenebene angeordneten Rückseitenflächen 30' und 30". Bei der in Fig. 4 gezeigten Ansicht ist die Rückseitenfläche 30' sichtbar, während unterhalb der Längsachse X eine dem Betrachter zugewandte, zur Hauptschneide 26" gehörende Spanfläche 32" sichtbar ist.

Wie Fig. 4 zeigt, ist in die Rückseitenfläche 30' eine Vertiefung 34' eingelassen, die bis zu einem Schneidkantenrücken 36 reicht. Der Schneidkantenrücken 36 liegt in zusammengebautem Zustand von Schneideinsatz und Halter am Nutgrund 16 an. Die Vertiefung 34' weist eine ebene Stützfläche 38' auf, die ebenso wie die Seitenwand der Vertiefung 34' mittels eines zylinderförmigen Fräsers hergestellt wird und in einem dem Schneidkantenrücken 36 abgewandten Bereich von einem kreissektorförmigen Rand 40' begrenzt ist.

In der dem Betrachter in Fig. 4 abgewandten Rückseitenfläche 30" ist eine gestrichelt dargestellte Vertiefung 34" eingebracht, die eine Stützfläche 38" bildet, die von einem kreissektorförmigen Rand 40" einerseits und einem geraden Randstück 42" andererseits begrenzt wird.

Fig. 6 zeigt einen Schnitt längs der Linie VI-VI in Fig. 4. Während die Vertiefung 38' senkrecht zur Zeichenebene nach unten hin offen ist, ist die Vertiefung 38" senkrecht zur Zeichenebene in Fig. 6 begrenzt.

Fig. 6 zeigt weiterhin, daß die in Fig. 6 strichpunktiert dargestellten Flächennormalen auf den Stützflächen 38' und 38" unter einem spitzen Winkel zur Querachse Y verlaufen. Dieser Winkel ist gleich dem Winkel, unter dem die in Fig. 3 dargestellten strichpunktiert dargestellten Längsachsen der Bohrungen 20' und 20" zur Querachse Y bzw. zu den Nutseitenflächen 18' und 18" verlaufen.

Wie Fig. 9 zeigt, greifen im zusammengebauten Zustand Anschlagelemente in Form von Madenschrauben 50' und 50" in die Vertiefungen 34' und 34" ein. Die Madenschrauben 50' und 50" werden nach Einsetzen des Schneideinsatzes in die Nut 14 eingeschraubt, bis sie an den Stützflächen 38' und 38" anliegen. Aufgrund der speziellen Anordnung der Längsachsen 24' und 24" der Bohrungen 20' und 20" drehen die weiter eingedrehten Madenschrauben den Schneideinsatz in Fig. 9 im Uhrzeigersinn, d. h. in der gleichen Richtung wie die durch Pfeile angedeuteten, an den Hauptschneiden 26' und 26" angreifenden Schnittreaktionskräfte. Hierdurch kommt der Schnitteinsatz mit seinen Rückenseitenflächen 30' und 30" an den entsprechenden Nutseitenflächen 18' und 18" im äußeren Bereich des Durchmessers des Bohrers zur Anlage, wodurch die an den Hauptschneiden 26' und 26" angreifenden Schnittreaktionskräfte abgestützt werden.

Wie Fig. 9 weiterhin zeigt, sind die Längsachsen 24' und 24" der Bohrungen 20' und 20" mit etwas größerem Abstand voneinander angeordnet, als die Flächennormalen 39' und 39" der Stützflächen 38' und 38" (vgl. Fig. 6), so daß die Stirnflächen 52' und 52" der Madenschrauben 50', 50" die Stützflächen 38' und 38" des Schneideinsatzes 25 nur teilweise überdecken. Hierdurch wird erreicht, daß die mit einem Rechtsgewinde versehenen Madenschrauben beim Eindrehen zwischen ihren Stirnflächen und den jeweiligen Stützflächen eine Relativbewegung aufweisen, die in Fig. 9 in Richtung der senkrecht zur Zeichenebene verlaufenden Längsachse des Bohrers nach unten gerichtet ist, so daß der Schneideinsatz 25 mit seinem Schneideinsatzrücken 36 auf den Nutgrund 16 gedrückt wird. Weiterhin ist ein Einstellen bzw. eine Zentrierung des Schneideinsatzes 25 in Richtung der Y-Achse möglich, indem eine der beiden Madenschrauben 50' und 50" herausgedreht wird, während die andere hineingedreht wird. Wenn die Zentrierung bzw. Einstellung des Schneideinsatzes abgeschlossen ist, wird ein Anschlagelement mittels der Konterschraube gesichert. Dieses Anschlagelement wirkt dann mit der Ausnehmung 38' zusammen, die bis zur Endfläche 36 durchgezogen ist, so daß dieses feste Anschlagelement ständig im Halter verbleiben kann. Es ergibt sich damit eine asymmetrische Gestalt des Schneideinsatzes, der somit nur mit einer bestimmten Orientierung in den Halter eingestzt werden kann.

Anhand der Figur 9 kann eine weitere Besonderheit des Erfindungsgegenstandes erläutert werden. Wie ersichtlich, sind die Stützflächen 38' und 38" derart bezüglich der Achsen 24' und 24" angeordnet, daß der Flächenkontakt zwischen den Stirnseiten der Madenschrauben 50' und 50" mit den zugehörigen Stützflächen 38' bzw. 38" im wesentlichen nur auf einer Seite der Schraubenachsen 24', 24" stattfindet. Dies bedeutet, daß beim Justieren und beim Spannen des Schneideneinsatzes zwischen Madenschraube und Schneideinsatz Reibkräfte auftreten, die auf den Schlitzgrund 16 zu gerichtet sind. Beim Justieren und beim Spannen bleibt folglich eine feste axiale Auflage des Schneideinsatzes im Schlitzgrund sichergestellt.

Bei dem in den Figuren gezeigten Ausführungsbeispiel ist die Madenschraube 50' deutlich kürzer ausgeführt als die Madenschraube 50", so daß in der Bohrung 20' zusätzlich eine Konterschraube 55 Platz hat. Die Konterschraube 55 ist ebenfalls mit einem Innensechskant ausgeführt. Nach Zentrierung des Schneideinsatzes kann durch Anziehen der Konterschraube 55 die Lage der Madenschraube 50' gesichert werden. Bei einem notwendigen Wechsel des Schneideinsatzes 25 ist es dann lediglich notwendig, die Madenschraube 50 zu lösen und soweit herauszudrehen, daß sie nicht mehr in den Bereich der Nut 14 hineinragt. Da die Vertiefung 34' in Richtung auf den Nutgrund 16 bzw. den Schneideinsatzrücken 36 offenhin ausgebildet ist, kann der Schneideinsatz dann in Richtung der X-Achse aus der Nut gezogen werden, ohne die Kombination aus Madenschraube 50' und Konterschraube 55 lösen zu müssen.

Andererseits wird durch die entsprechend ausgebildete Vertiefung 34" bei eingeschraubter Madenschraube 50" gewährleistet, daß der Einsatz 25 nicht aus der Nut 14 herausfallen kann.

Die Befestigungselemente in Form von Anschlagelementen bzw. Madenschrauben gemäß der Erfindung greifen auf den jeweiligen Rückseitenflächen 30', 30" des Einsatzes 25 an, so daß den Einsatz 25 durchsetzende Bohrungen entfallen können. Wie die Figuren 4 und 5 zeigen, können bei dem erfindungsgemäßen Schneideinsatz daher große Verhältnisse für den Abstand der beiden Nebenschneiden 27' und 27" (=D) zur Gesamtabmessung t des Schneideinsatzes 25 in Richtung der X-Achse gewählt werden. Dieses Verhältnis, das vom Spitzenwinkel beeinflußt ist, beträgt etwa 2. Das Verhältnis D/t*, wobei t* die axiale Länge des Führungsdurchmessers bedeutet, kann in Bereiche um 3,5 angehoben werden.

Fig. 1 zeigt, daß der Halter 10 bzw. der Schaft 11 des Bohrers einen Kühlmittelkanal 60 aufweisen kann, der sich im Bereich der Bohrerspitze 12 in zwei Teilkanäle 62', 62" teilt. Die beiden Teilkanäle 62' und 62" treten jeweils im Bereich zwischen jeweils einer Spannut 64", 64' und einer Bohrung 20', 20" aus einer jeweiligen Hauptfreifläche des Bohrers aus.

Durch den erfindungsgemäßen Bohrer wird ein Bohrer mit einem auswechselbaren Schneideinsatz geschaffen, der fertigungstechnisch einfach herzustellen ist, bei dem der Schneideinsatz die Bohrerspitze des Halters weniger schwächt als bei bisher bekannten Bohrerbauformen und der mithin stabiler ist, und bei dem ein notwendiger Wechsel des Schneideinsatzes schnell und einfach zu bewerkstelligen ist.

Selbstverständlich sind Abweichungen von dem zuvor beschriebenen Ausführungsbeispiel möglich, ohne den Grundgedanken der Erfindung zu verlassen. So ist der Schneideinsatz nicht auf eine punktsymmetrische Gestaltung beschränkt. Es sind auch grundsätzlich andere Schneidenverläufe denkbar, wenngleich ein besonderer Vorteil der Erfindung gerade dann zum tragen kommt, wenn aufgrund eines spezifischen Schneidenverlaufs die Stärke des Schneideinsatzes im Bereich der Schneidbrust verringert ist. Als Werkstoffe für den Schneideinsatz können neben Hartmetall auch Keramik- und Cermet-Werkstoffe Anwendung finden. Die Schneidenplatte kann als geschliffene oder auch lediglich als gesinterte und damit preisgünstigere Platte ausgeführt sein. Das Anwendungsgebiet liegt bei Bohrungstiefen bis 7,5xd, wobei d den Bohrungsdurchmesser bezeichnet.

**Patentansprüche**

1. Bohrer, bestehend aus einem im wesentlichen zylindrischen Halter (10) mit einer Längsachse (X) und einer rechtwinklig dazu verlaufenden Querachse (Y), mit einer Bohrspitze (12), in der eine längs der Querachse (Y) verlaufende Nut (14) mit einem Nutgrund (16) und mit Nutseitenwänden (18', 18") angeordnet ist, und mit einem in der Nut angeordneten Schneideinsatz, insbesondere aus Hartmetall, der **zwei vorzugsweise punktsymmetrisch** zur Längsachse (X) angeordnete Hauptschneiden (26', 26") mit zugeordneten, sich nach vorne anschließende Spanflächen (32', 32") und zwei je einer Spanfläche auf der anderen Seite der Querachse (Y) gegenüberliegende Rückseitenflächen (30', 30") aufweist, **dadurch gekennzeichnet,**

   - daß der Kalter (10) zwei vorzugsweise in einer Radialebene (R) des Bohrers liegende, jeweils im Bereich einer Rückseitenfläche (30', 30") des Einsatzes (25) angeordnete Bohrungen (20', 20") aufweist, die jeweils in einer Nutseitenwand (18', 18") münden, wobei die Längsachsen (24', 24") der Bohrungen (20', 20") unter jeweils einem spitzen Winkel zu der jeweiligen Nutseitenwand (18', 18") und der anliegenden Rückseitenfläche (30', 30") des Einsatzes (25) verlaufen,

- daß in den Bohrungen (20', 20") aus jeweils einer Nutseitenfläche (18', 18") austretende Spann- und Anschlagelemente (50', 50") angeordnet sind,

- daß mindestens eines der beiden Anschlagelemente (50") in Richtung der Längsachse (24") der Bohrung (20") beweglich bzw. einstellbar ist, und

- daß in den Rückseitenflächen (30', 30") des Einsatzes (25) mit den Anschlagelementen (50', 50") korrespondierende Stützflächen (38', 38") bildende Vertiefungen (34', 34") vorgesehen bzw. ausgeformt sind.

2. Bohrer nach Anspruch 1 insbesondere mit einer punktsymmetrischen Schneidengeoemetrie, dadurch gekennzeichnet, daß die Bohrungen (20', 20") unter dem selben spitzen Winkel zu der jeweiligen Nutseitenwand (18', 18") und der anliegenden Rückseitenfläche (30', 30") des Einsatzes (25) verlaufen.

3. Bohrer nach Anspruch 2, dadurch gekennzeichnet, daß die Längsachsen (24', 24") der Bohrungen (20', 20") den selben Abstand von der Längsachse (X) des zylindrischen Halters (10) des Bohrers aufweisen.

4. Bohrer nach einem der vorhergehenden Ansprüche, dadurch gekennzeichnet, daß mindestens ein Anschlagelement (50', 50") eine Schraube ist.

5. Bohrer nach Anspruch 4, dadurch gekennzeichnet, daß die Schraube eine Madenschraube (50', 50") mit einem Innen-Sechskantkopf ist.

6. Bohrer nach einem der vorhergehenden Ansprüche, dadurch gekennzeichnet, daß mindestens eine der Stützflächen (38', 38") eine ebene Fläche ist.

7. Bohrer nach Anspruch 6, dadurch gekennzeichnet, daß die ebene Stützfläche (38', 38") durch einen geraden Rand (42', 42") und einen kreissektorförmigen Rand begrenzt wird, und daß sich an den kreissektorförmigen Rand (40', 40") eine senkrecht dazu verlaufende, zylindermantelförmige Wand (39', 39") anschließt, die die zweite Wand der Vertiefung (34', 34") bildet.

8. Bohrer nach einem der Ansprüche 6 oder 7, dadurch gekennzeichnet, daß sich die Vertiefung (34') bis zu der dem Nutgrund zugewandten Kante (36) des Schneideinsatzes (25) erstreckt.

9. Bohrer nach einem der vorhergehenden Ansprüche, dadurch gekennzeichnet, daß das Anschlagelement aus einer Madenschraube (50') und einer diese sichernden Konterschraube (55) besteht.

10. Bohrer nach einem der vorhergehenden Ansprüche, dadurch gekennzeichnet, daß die auf den Rückseitenflächen (30', 30") des Schneideinsatzes (25) ausgebildeten Vertiefungen (34', 34") und die von ihnen gebildeten Stützflächen (38', 38") in bezug auf die Bohrungen (20', 20") dergestalt versetzt angeordnet sind, daß sich rechtwinklig zu den Längsachsen (24', 24") der Anschlagelemente (50', 50") erstreckende Stirnflächen (52', 52") und die Stützflächen (38', 38") nur teilweise überdecken.

11. Bohrer nach einem der vorhergehenden Ansprüche, dadurch gekennzeichnet, daß die Hauptschneiden (26', 26") konkav gekrümmt sind.

12. Bohrer nach einem der vorhergehenden Ansprüche, dadurch gekennzeichnet, daß der Schaft (11) des Bohrers zwei sich von der Bohrerspitze (12) wegerstreckende Spannuten (64', 64") aufweist.

13. Bohrer nach den Ansprüchen 11 und 12, dadurch gekennzeichnet, daß die Spanflächen (32', 32") des Schneideinsatzes (25) konkav gekrümmt sind und in die Spannuten (64', 64") übergehen.

14. Bohrer nach einem der vorhergehenden Ansprüche, dadurch gekennzeichnet, daß der Durchmesser (D) zwischen 10 und 50mm, vorzugsweise zwischen 18 mm und 40 mm beträgt.

15. Bohrer nach einem der vorhergehenden Ansprüche, dadurch gekennzeichnet, daß das Verhältnis (D/t) zwischen dem Durchmesser (D) des Bohrers und der Gesamtabmessung (t) des Schneideinsatzes (25) in Längsrichtung des Bohrers etwa 2 beträgt.

16. Bohrer nach einem der vorhergehenden Ansprüche, dadurch gekennzeichnet, daß das Verhältnis (D/t*) zwischen dem Durchmesser (D) des Bohrers und der axialen Länge t* des Führungsdurchmessers des Schneideinsatzes (25) bis in den Bereich um 3,5 angehoben ist.

17. Bohrer nach einem der vorhergehenden Ansprüche, dadurch gekennzeichnet, daß der Spitzenwinkel größer ist als 130°.

18. Bohrer nach einem der vorhergehenden Ansprüche, dadurch gekennzeichnet, daß in dem Halter ein Kühlmittelkanal (60) angeordnet ist.

19. Bohrer nach Anspruch 18, dadurch gekennzeichnet, daß sich der Kühlmittelkanal (60) verzweigt.

20. Bohrer nach Anspruch 19, dadurch gekennzeichnet, daß der Kühlmittelkanal (60) in der Längsachse (X) des Bohrers (10) verläuft und sich im Bereich der Bohrerspitze (12) in zwei Teilkanäle (62', 62") teilt, die im Bereich zwischen jeweils einer Spannut (64', 64") und den Bohrungen (20', 20") für die Anschlagelemente (50', 50")aus der zum Halter (10) gehörenden jeweiligen Hauptfreifläche austreten.

21. Bohrer nach einem der Ansprüche 2 bis 20, **dadurch gekennzeichnet, daß** die von den Spann- und Anschlagelementen auf den Schneideinsatz übertragenen Kräfte ein Moment (M) erzeugen, das der Schnittrichtung (RS) des Bohrers entgegen gerichtet ist.

**Claims**

1. A drill, consisting of a substantially cylindrical holder (10) with a longitudinal axis (X) and a transverse axis (Y) extending perpendicularly thereto, with a drill tip (12) in which a groove (14) is disposed, said groove extending along the transverse axis (Y) and having a base (16) and side walls (18', 18"), and with a cutting insert, more particularly of hard metal, which is disposed in the groove and which has two main cutting edges (16', 26") disposed preferably point-symmetrically in relation to the longitudinal axis (X) and having associated forwardly adjacent cutting surfaces (32', 32") and two rear surfaces (30', 30") each opposite a cutting surface on the other side of the transverse axis (Y), characterised in that

   - the holder (10) has two bores (20', 20") disposed preferably in a radial plane (R) of the drill and each situated in the region of a rear surface (30', 30") of the insert (20), said bores respectively leading into a groove side wall (18', 18"), the longitudinal axes (24', 24") of the bores (20', 20") each extending at an acute angle to the respective groove side wall (18', 18") and the adjacent rear surface (30', 30") of the insert (25),

   - in that clamping and stop elements (50', 50") each emerging from a groove side surface (18', 18") are disposed in the bores (20', 20"),

   - in that at least one of the two stop elements (50") is movable or adjustable in the direction of the longitudinal axis (24") of the bore (20"), and

   - in that recesses (34', 34") are provided or formed in the rear surfaces (30', 30") of the insert (25) and form support surfaces (38', 38") corresponding to the stop elements (50', 50").

2. A drill according to claim 1, more particularly with a point-symmetrical cutting edge geometry, characterised in that the bores (20', 20") extend at the same acute angle to the respective groove side wall (18', 18") and the adjacent rear surface (30', 30") of the insert (25).

3. A drill according to claim 2, characterised in that the longitudinal axes (24', 24") of the bores (20', 20") have the same distance from the longitudinal axis (X) of the cylindrical holder (10) of the drill.

4. A drill according to any one of the preceding claims, characterised in that at least one stop element (50', 50") is a screw.

5. A drill according to claim 4, characterised in that the screw is a grub screw (50', 50") having an internal hexagonal head.

6. A drill according to any one of the preceding claims, characterised in that at least one of the support surfaces (38', 38") is a flat surface.

7. A drill according to claim 6, characterised in that the flat support surface (38', 38") is bounded by a straight edge (42', 42") and an edge in the form of a segment of a circle, and in that adjoining the edge (40', 40") in the form of a segment of a circle is a wall (39', 39") extending perpendicularly thereto and in the form of a cylindrical jacket and forming the second wall of the recess (34', 34").

8. A drill according to claim 6 or 7, characterised in that the recess (34') extends as far as the edge (36) of the cutting insert (25) facing the base of the groove.

9. A drill according to any one of the preceding claims, characterised in that the stop element consists of a grub screw (50') and a locking screw (55) to lock the same.

10. A drill according to any one of the preceding claims, characterised in that the recesses (34', 34") formed on the rear surfaces (30', 30") of the cutting insert (25), and the support surfaces (38', 38") formed by them, are so offset with respect to the bores (20', 20") that the support surfaces (38', 38") and end faces (52', 52") extending perpendicularly to the longitudinal axes (24', 24") of the stop elements (50', 50") overlap only partially.

11. A drill according to any one of the preceding claims, characterised in that the main cutting edges (26', 26") are concave.

12. A drill according to any one of the preceding claims, characterised in that the shank (11) of the drill comprises two cutting grooves (64', 64") extending away from the drill tip (12).

13. A drill according to claims 11 and 12, characterised in that the cutting surfaces (32', 32") of the cutting insert (25) are concave and merge into the cutting grooves (64', 64")

14. A drill according to any one of the preceding claims, characterised in that the diameter (D) is between 10 and 50 mm, preferably between 18 and 40 mm.

15. A drill according to any one of the preceding claims, characterised in that the ratio (D/t) between the diameter (D) of the drill and the overall dimension (t) of the cutting insert (25) in the longitudinal direction of the drill is about 2.

16. A drill according to any one of the preceding claims, characterised in that the ratio (D/t*) of the diameter (D) of the drill to the axial length (t*) of the guide diameter of the cutting insert (25) is raised by about 3.5.

17. A drill according to any one of the preceding claims, characterised in that the tip angle is more than 130°.

18. A drill according to any one of the preceding claims, characterised in that a coolant duct (60) is provided in the holder.

19. A drill according to claim 18, characterised in that the coolant duct (60) branches.

20. A drill according to claim 19, characterised in that the coolant duct (60) extends on the longitudinal axis (X) of the drill (10) and divides into two sub-ducts (62', 62") in the region of the drill tip (12), said sub-ducts emerging from the respective main free surface belonging to the holder (10) in the region between respectively a cutting groove (64', 64") and the bores (20', 20") for the stop elements (50', 50").

21. A drill according to any one of claims 2 to 20, characterised in that the forces transmitted by the clamping and stop elements to the cutting insert produce a moment (M) which is directed in opposition to the cutting direction (RS) of the drill.

## Revendications

1. Foret, constitué d'un support (10) essentiellement cylindrique avec un axe longitudinal (X) et un axe transversal (Y), perpendiculaire à celui-ci, avec une pointe de perçage (12), dans laquelle est ménagée une rainure (14) s'étendant le long de l'axe transversal (Y), avec un fond (16) et avec des parois latérales (18' , (18"), et avec une garniture de coupe, en particulier en métal fritté, placée dans la rainure, qui présente deux lames principales (26', 26"), disposées de préférence dans une symétrie ponctuelle par rapport à l'axe longitudinal (X), avec des surfaces à copeaux (32', 32") associées, se raccordant vers l'avant et deux surfaces latérales arrière (30', 30") faisant face chacune à une surface à copeaux sur l'autre côté de l'axe transversal (Y), caractérisé

- en ce que le support (10) présente deux perçages (20', 20") situés de préférence dans un plan radial (R) du foret, disposés chacun dans la zone d'une surface latérale arrière (30', 30") de la garniture (25), perçages qui débouchent chacun dans une paroi latérale (18', 18") de la rainure, les axes longitudinaux (24', 24") des perçages (20', 20") s'étendant chacun sous un angle aigu par rapport à la paroi latérale (18', 18") respective de la rainure et par rapport à la surface latérale arrière (30', 30") s'y appliquant de la garniture (25),

- en ce que dans les perçages (20', 20") sont prévus des éléments de serrage et de butée (50', 50") ressortant d'une surface latérale (18', 18") de la rainure,

- en ce qu'au moins l'un des deux éléments de butée (50") est mobile ou réglable dans la direction de l'axe longitudinal (24") du perçage (20") et

- en ce que dans les surfaces latérales arrière (30', 30") de la garniture (25) sont prévus ou formés des creux (34', 34") formant des surfaces d'appui (38', 38"), correspondant aux éléments de butée (50', 50").

2. Foret selon la revendication 1 en particulier avec une géométrie des lames dans une symétrie ponctuelle, caractérisé en ce que les perçages (20', 20") s'étendent sous le même angle aigu par rapport à la paroi latérale (18', 18") respective de la rainure et par rapport à la surface latérale arrière (30', 30") s'y appliquant de la garniture (25).

3. Foret selon la revendication 2, caractérisé en ce que les axes longitudinaux (24', 24") des perçages (20', 20") présentent la même distance par rapport à l'axe longitudinal (X) du support (10) cylindrique du foret.

4. Foret selon l'une des revendications précédentes, caractérisé en ce qu'au moins un élément de butée (50', 50") est une vis.

5. Foret selon la revendication 4, caractérisé en ce que la vis est une vis sans tête (50', 50") à six pans creux.

**6.** Foret selon l'une des revendications précédentes, caractérisé en ce qu'au moins l'une des surfaces d'appui (38', 38") est une surface plane.

**7.** Foret selon la revendication 6, caractérisé en ce que la surface d'appui (38', 38") plane est délimitée par un bord rectiligne (42', 42") et un bord en forme de secteur de cercle et en ce qu'au bord (40', 42") en forme de secteur de cercle se rattache une paroi (39', 39") en forme d'enveloppe de cylindre, s'étendant perpendiculairement à celui-ci paroi qui forme la deuxième paroi du creux (34', 34").

**8.** Foret selon l'une des revendications 6 ou 7, caractérisé en ce que le creux (34') s'étend jusqu'à l'arête (36), tournée vers le fond de la rainure, de la garniture de coupe (25).

**9.** Foret sel on l'une des revendications précédentes, caractérisé en ce que l'élément de butée est constitué d'une vis sans tête (50') et d'une contre-vis (55) bloquant celle-ci.

**10.** Foret sel on l'une des revendications précédentes, caractérisé en ce que les creux (34', 34"), formés sur les surfaces latérales arrière (30', 30") de la garniture de coupe (25) et les surfaces d'appui (38', 38") formées par ceux-ci, sont décalés par rapport aux perçages (20', 20"), de manière que des surfaces frontales (52', 52"), s'étendant perpendiculairement aux axes longitudinaux (24', 24") des éléments de butée (50' 50") et les surfaces d'appui (38', 38") ne se recouvrent que partiellement.

**11.** Foret selon l'une des revendications précédentes, caractérisé en ce que les lames principales (26', 26") sont concaves.

**12.** Foret selon l'une des revendications précédentes, caractérisé en ce que la tige (11) du foret présente deux rainures à copeaux (64', 64") s'éloignant de la pointe (12) du foret.

**13.** Foret selon les revendications 11 et 12, caractérisé en ce que les surfaces à copeaux (32', 32") de la garniture de coupe (25) sont concaves et se prolongent par les rainures à copeaux (64', 64").

**14.** Foret selon l'une des revendications précédentes, caractérisé en ce que le diamètre (D) est compris entre 10 et 50 mm, de préférence entre 18 mm et 40 mm.

**15.** Foret selon l'une des revendications précédentes, caractérisé en ce que le rapport (D/t) entre le diamètre (D) du foret et la dimension totale (t) de la garniture de coupe (25), est environ égal à 2 dans la direction longitudinale du foret.

**16.** Foret sel on l'une des revendications précédentes, caractérisé en ce que le rapport (D/t*) entre le diamètre (D) du foret et la longueur axiale t* du diamètre de guidage de la garniture de coupe (25), est relevé jusqu'à environ 3,5.

**17.** Foret selon l'une des revendications précédentes, caractérisé en ce que l'angle de pointe est supérieur à 130°.

**18.** Foret selon l'une des revendications précédentes, caractérisé en ce que dans le support est ménagé un canal de réfrigérant (60).

**19.** Foret selon la revendication 18, caractérisé en ce que le canal de réfrigérant (60) se ramifie.

**20.** Foret selon la revendication 19, caractérisé en ce que le canal de réfrigérant (60) s'étend dans l'axe longitudinal (X) du foret (10) et se partage, dans la zone de la pointe (12) du foret, en deux canaux partiels (62', 62") qui dans la région comprise entre une rainure à copeaux (64', 64") et les perçages (20', 20") pour les éléments de butée (50', 50"), ressortent de la surface libre principale respective faisant partie du support (10).

**21.** Foret selon l'une des revendications 2 à 20, caractérisé en ce que les forces transmises par les éléments de serrage et de butée à la garniture de coupe, produisent un moment (M), qui est dirigé dans le sens contraire au sens de coupe (RS) du foret.

Fig. 1

Fig. 2

Fig. 3

28″   26′

32″

Fig. 7

25

t   39′

VI   30′  34′
26′  40′
28′  42′      X      38′
42″            38″
40″            36
26″            32″
39″
VI
t*   34″

Fig. 4

26′ 27′ 28′
30′
30″
28″ 26″
27′

Fig. 5

26′   30′
32′   38′
39′
38′   39″
30″   26″
α

Fig 6

EP 0 674 560 B1

Fig. 8

Fig. 9